# FASCICULE DE BREVET EUROPEEN

(11) **EP 0 931 618 B1**
(45) Date de publication et mention de la délivrance du brevet: **14.05.2003**
(21) Numéro de dépôt: 99420020.2
(22) Date de dépôt: 22.01.1999
(51) Int. Cl.: B23K 1/015

(54) **Procédé de traitement thermique d'une pièce à l'aide d'au moins un liquide de transfert thermique et four à condensation pour sa mise**
Verfahren zum thermischen Bearbeiten von Werkstücken mittels einer thermischen übertragenden Flüssigkeit und Kondensationsofen zur Durchführung des Verfahrens
Workpiece thermal treatment process using a thermal transfer liquid and condensing furnace using this process

(30) Priorité: 23.01.1998 FR 9800942
(43) Date de publication de la demande: 28.07.1999
(73) Titulaire: Garidel, Jean-Paul, 26400 Allex (FR)
(72) Inventeur: Garidel, Jean-Paul, 26400 Allex (FR)
(74) Mandataire: Thibault, Jean-Marc

(56) Documents cités:
- EP-A- 0 153 631
- EP-A- 0 247 815
- US-A- 4 321 031
- US-A- 4 838 476

## Description

La présente invention concerne le domaine technique du traitement au sens général à l'aide d'un liquide de transfert thermique, de pièces de toute nature et elle vise, de préférence, le traitement de pièces formées d'un support sur lequel sont montés des composants du type, par exemple, électronique, électrique, électromécanique ou mécanique, à l'aide d'un matériau d'apport déposé ponctuellement en relation des pattes de fixation des composants. La présente invention propose donc un procédé de traitement thermique d'une pièce à l'aide d'au moins un liquide de transfert thermique et un four à condensation conformément au préambule de la revendication 8 (voir, par exemple US-A-4 838 476).

L'invention trouve une application particulièrement avantageuse dans la technique de traitement relative à l'assemblage de composants par polymérisation dans laquelle le matériau d'apport est formé par un polymère ou dans la technique de refusion ou de soudure de composants, pour laquelle le matériau d'apport est constitué par un alliage.

Dans le domaine technique préféré de l'invention, il est connu divers types de machines permettant d'assurer la fixation des composants sur un support par la fusion du matériau d'apport. Il est ainsi connu d'utiliser une machine de brasage adaptée pour élever rapidement et uniformément la température du support et des composants jusqu'à une température légèrement supérieure au point de fusion du matériau d'apport permettant d'obtenir le soudage par brasure ou la polymérisation du matériau d'apport.

Dans l'état de la technique, il est connu de réaliser une première catégorie de machine sous la forme d'un four à convexion, à infrarouge ou à convexion forcée équipée ou non d'une atmosphère contrôlée. L'avantage principal de l'utilisation d'un four apparaît dans la facilité à être inséré dans une ligne de fabrication de pièces. Dans le même sens, un four autorise un traitement en flot continu des pièces. Toutefois, il doit être considéré qu'un four présente des inconvénients majeurs liés essentiellement au temps de traitement relativement long, à la mauvaise transmission de la chaleur à la pièce à traiter, à leur coût élevé et à la mise en oeuvre d'un gaz inerte pour les fours fonctionnant sous une atmosphère contrôlée.

Il est connu, dans l'état de la technique, une deuxième catégorie de machines assurant un traitement par l'intermédiaire de la vapeur d'un liquide de transfert thermique. Ainsi, une machine de traitement, dite en phase vapeur, comporte généralement une cuve contenant un liquide du type fluorocarboné, destiné à être porté à une température d'ébullition par des moyens de chauffage, de manière à produire dans une zone d'assemblage ou de soudure, une vapeur primaire saturée et inerte dont la température est légèrement supérieure au point de fusion du matériau d'apport. La zone d'assemblage ou de soudure est délimitée sensiblement entre le niveau du liquide et un serpentin assurant une condensation de la vapeur primaire. Cette zone d'assemblage ou de soudure est surmontée ou non par une zone de préchauffage ou de refroidissement dans laquelle règne une vapeur secondaire.

La cuve comporte dans sa partie haute, une ouverture de passage susceptible d'être fermée par un couvercle et destinée à autoriser l'introduction à l'intérieur de la cuve, du support équipé des composants à assembler. Un tel support est pris en charge par un appareil assurant son déplacement et son maintien successivement dans les zones de préchauffage, de soudure et de refroidissement. Ainsi, après un maintien du support dans la zone de préchauffage, pendant un temps déterminé, le support est mis en contact avec la vapeur primaire pour obtenir un transfert de la chaleur latente de condensation de la vapeur vers le support et les composants associés. Cet apport calorifique élève rapidement et uniformément la température du support et des composants jusqu'à celle de la vapeur primaire entraînant la fusion du matériau d'apport et, par suite, selon la technique utilisée, le soudage par brasure ou la polymérisation des composants sur le support.

Le brevet **US 4 838 476** , qui est considéré comme représentant l'état de la technique le plus proche, décrit un procédé de traitement thermique d'une pièce à l'aide d'au moins un liquide de transfert thermique présentant un point d'ébullition à une valeur donnée, ce procédé consistant à placer la pièce à traiter à l'intérieur d'un four dont la structure interne détermine une enceinte accessible par au moins une porte, à faire régner dans cette enceinte du four, une vapeur obtenue à partir d'une vaporisation du liquide de transfert thermique, pour assurer en partie sa condensation sur la pièce à traiter et le traitement de la pièce, à fermer, après introduction de la pièce à l'intérieur du four la ou les portes de manière à obtenir une enceinte hermétique, à traiter la pièce et à la sortir du four. Ce brevet décrit aussi une installation de traitement thermique d'une pièce comportant :
- une enveloppe délimitant une enceinte de traitement thermique accessible par au moins une porte,
- un système pour faire régner à l'intérieur de l'enceinte, une vapeur insaturée obtenue à partir de l'évaporation d'un liquide de transfert thermique et destinée à être condensée en partie, sur la pièce à traiter. Un tel système comporte une buse d'injection d'un liquide destiné à tomber sur une surface de réception chauffée par des moyens de chauffage adaptés.
- et un dispositif d'extraction de la vapeur régnant à l'intérieur de l'enceinte du four.

Le brevet **US 4 321 031 A** décrit également une installation de traitement thermique d'une pièce comportant une enveloppe délimitant une enceinte de traitement thermique accessible par deux portes et dans laquelle règne une vapeur destinée à être condensée en partie sur la pièce à traiter. Cette installation comporte en amont de la porte d'introduction et en aval de la porte de sortie, des moyens de récupération de la vapeur.

Ce type de machine présente des avantages indéniables en ce qui concerne l'homogénéité et la qualité du transfert thermique et un investissement inférieur par rapport à celui relatif à un four. Toutefois, ce type de machine présente des inconvénients en ce qui concerne la consommation du liquide de transfert thermique et la difficulté d'insérer cette machine dans une ligne de fabrication et, par suite, d'assurer un traitement en flot continu.

L'analyse des solutions techniques antérieures conduit à constater qu'il n'existe pas actuellement de machine de traitement donnant entière satisfaction.

L'objet de l'invention vise à remédier à ce problème en proposant un procédé de traitement thermique d'une pièce adaptée pour combiner les avantages des deux techniques connues en s'affranchissant de leurs inconvénients.

Un objet de l'invention est donc de proposer un procédé de traitement d'une pièce à l'aide d'un liquide de transfert thermique, permettant d'intégrer l'opération de traitement dans une ligne de fabrication en autorisant ainsi un traitement en flot continu, ce procédé offrant, par ailleurs, un transfert thermique homogène et de qualité.

Pour atteindre ces objectifs, l'objet de l'invention vise donc à proposer un procédé de traitement thermique conformément à la revendication 1.

L'objet de l'invention vise également à proposer un four à condensation pour le traitement thermique d'une pièce conformément à la revendication 8.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une coupe longitudinale en élévation d'un exemple schématique de réalisation d'un four conforme à l'invention.
La **fig. 2** est une coupe transversale prise sensiblement selon les lignes II-II de la **fig. 1.**

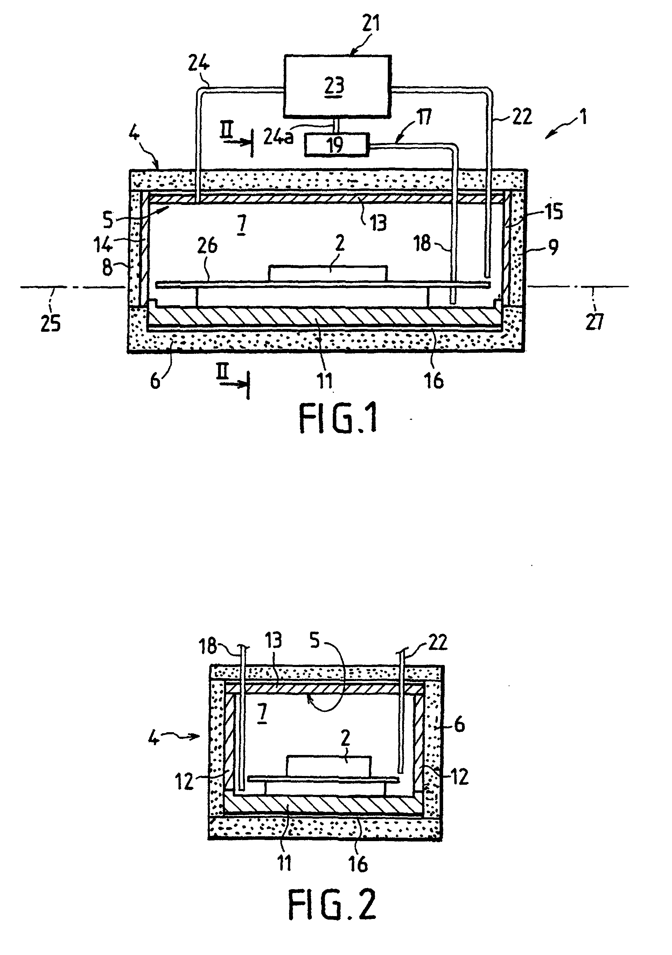

Les **fig. 1** et **2** illustrent un exemple de réalisation d'un four **1** conforme à l'invention permettant d'assurer le traitement thermique d'une pièce **2** au sens général. Dans l'exemple préféré de réalisation décrit ci-après, la pièce **2** est formée par un support équipé de composants de tous types en combinaison ou non, tels qu'électroniques, électriques, mécaniques ou électromécaniques, organisés de manière appropriée pour assurer les fonctions spécifiques en relation de l'application visée. Dans l'exemple illustré, le four **1** est destiné à assurer l'assemblage des composants sur le support par fusion d'un matériau d'apport déposé ponctuellement en relation des pattes de fixation des composants. De manière classique, le matériau d'apport est formé par un polymère ou par un alliage. Par exemple, le support constitue un circuit imprimé qui, équipé de ses divers composants, constitue une carte ou pièce **2.**

Le four **1** selon l'invention comporte une enveloppe **4** formée d'une structure interne **5**, dite chaude, équipée, de préférence, d'un revêtement d'isolation thermique **6.** La structure interne **5** délimite intérieurement une enceinte hermétique **7** accessible par au moins une et, comme illustré sur l'exemple de réalisation, par deux portes **8** et **9,** respectivement d'entrée et de sortie.

Dans l'exemple de réalisation illustré, la structure interne **5** comporte une sole **11** à partir de laquelle s'élèvent deux parois latérales verticales **12** aboutissant à un plafond **13.** La structure interne **5** est complétée, dans l'exemple illustré, par des parois avant **14** et arrière **15** appartenant respectivement aux portes d'entrée **8** et de sortie **9** qui sont équipées de moyens d'ouverture et de fermeture automatique connus en soi non représentés. Cette structure interne **5** constituée par la sole **11**, les parois latérales **12,** le plafond **13** et les parois avant **14** et arrière **15**, délimite intérieurement une enceinte hermétique ou étanche lorsque les portes sont fermées. Les divers éléments constitutifs de la structure interne **5** sont réalisés en un matériau présentant une bonne capacité de conduction ou de transfert thermique. Par exemple, la sole **11,** les parois latérales **12,** le plafond **13** et les parois avant **14** et arrière **15** sont des éléments se présentant sous la forme de plaques métalliques.

Le four **1** est équipé de moyens de chauffage **16** de la structure interne **5,** de manière à placer cette dernière à une température déterminée. Par exemple, les moyens de chauffage **16** sont constitués par des résistances électriques montées sur les faces externes d'au moins certaines et, de préférence, de toutes les pièces constitutives de la structure interne **5.** Bien entendu, il peut être envisagé de réaliser les moyens de chauffage **16** sous d'autres formes, comme par exemple, à partir d'un circuit de circulation d'un fluide caloporteur. De préférence, la structure interne **5** est pourvue extérieurement du revêtement d'isolation thermique **6** pour limiter les pertes calorifiques. Le revêtement d'isolation thermique **6** peut être constitué de toute manière appropriée connue de l'homme de l'art pour recouvrir les différentes pièces constitutives de la structure interne **5.**

Conformément à l'invention, le four **1** est équipé d'un système **17** adapté pour faire régner à l'intérieur de l'enceinte **7,** une vapeur obtenue à partir de l'évaporation d'un liquide de transfert thermique présentant un point ou une température d'ébullition de valeur donnée. Dans l'exemple d'application considéré pour le brasage des composants, la température d'ébullition du liquide est supérieure au point de fusion du matériau d'apport. Selon une caractéristique préférée de réalisation, le système **17** pour faire régner la vapeur à l'intérieur de l'enceinte, est formé par un circuit d'amenée **18** du liquide de transfert thermique contenu dans un bac **19.** Le circuit **18** d'amenée du liquide débouche avantageusement sur la sole **11** du four dont la face interne est adaptée pour permettre la réception du liquide qui se répand sur sa surface. La sole **11** du four est portée à une température supérieure au point d'ébullition du liquide pour assurer son évaporation. La sole **11** du four est également conçue pour conserver une température supérieure au point d'ébullition du liquide, même lors de l'amenée du liquide sur sa face interne. A cet effet, la sole **11** est adaptée pour accumuler une chaleur suffisante pour assurer l'évaporation du liquide mis en contact avec sa face interne.

Il est à noter qu'il peut être prévu, comme système **17** pour faire régner une vapeur à l'intérieur de l'enceinte **7,** un système assurant l'amenée d'une vapeur à l'intérieur de l'enceinte. Cette vapeur est obtenue à l'extérieur de l'enceinte par tous moyens appropriés à partir de l'évaporation d'un liquide de transfert thermique. Il doit être compris que l'objet de l'invention vise à assurer l'obtention d'une vapeur à l'intérieur de l'enceinte **7,** de manière qu'au moins une partie d'entre-elle puisse être condensée sur la pièce **2** à traiter.

Selon une autre caractéristique de l'invention, le four **1** comporte un dispositif **21** assurant une extraction de la vapeur régnant à l'intérieur de l'enceinte hermétique **7.** Le dispositif d'extraction **21** est constitué dans une variante préférée de réalisation, par l'intermédiaire d'un circuit d'aspiration **22** débouchant en partie basse de l'enceinte **7** et relié à l'extérieur du four, à une unité **23** de condensation de la vapeur aspirée. L'unité de condensation **23** comporte une canalisation de retour **24** débouchant dans l'enceinte hermétique **7,** de manière à envoyer à l'intérieur de celle-ci, l'air préalablement aspiré et déchargé en vapeur. Le dispositif d'extraction **21** constitue ainsi un circuit fermé de condensation de la vapeur contenue dans l'enceinte hermétique **7.** L'unité de condensation **23** est équipée, de préférence, d'un circuit **24a** de retour du liquide au réservoir **19**.

Bien entendu, il peut être prévu une autre forme de réalisation du dispositif d'extraction **21** de la vapeur. Par exemple, ce dispositif peut être constitué par un condenseur placé à l'intérieur de l'enceinte **7** du four assurant la condensation de la vapeur à l'intérieur de l'enceinte hermétique. Dans cette forme de réalisation, l'enceinte est équipée d'un moyen d'extraction du liquide de transfert thermique permettant de l'évacuer de l'enceinte.

Le four **1** selon l'invention est également équipé, de préférence, d'une unité de commande non représentée, permettant de piloter le fonctionnement de ses divers éléments constitutifs conformément au cycle de traitement qui va être décrit ci-après.

La mise en oeuvre du four à condensation selon l'invention découle directement de la description qui précède.

Le four **1** est directement adapté pour assurer le traitement d'une pièce **2** qui est acheminée par tous moyens de transport **25** connus, à l'intérieur du four **1** qui est équipé d'un moyen interne de convoyage **26** connu en soi adapté pour supporter la pièce **2.** Les portes **8** et **9** sont fermées, de manière à obtenir une enceinte hermétique **7**. La structure interne **5** du four est placée, grâce aux moyens de chauffage **16**, à une température adaptée pour permettre la condensation sur la pièce à traiter, d'une partie de la vapeur obtenue à partir de l'évaporation du liquide de transfert thermique. De préférence, la structure interne **5** du four est placée à une température supérieure au point d'ébullition du liquide. A titre d'exemple, pour une température d'ébullition d'un liquide de l'ordre de 215°C, il peut être ainsi prévu de placer la structure interne à une température de l'ordre de 240°C. L'amenée du liquide de transfert thermique par la canalisation **18** en contact avec la sole **11,** permet d'assurer son évaporation quasi-instantanée à l'intérieur de l'enceinte hermétique. Il s'ensuit une évaporation à l'intérieur de l'enceinte dont le niveau de vapeur monte progressivement jusqu'à obtenir une saturation à l'intérieur de l'enceinte. Selon une caractéristique préférée de réalisation, la totalité de la structure interne **5** est portée à une température supérieure au point d'ébullition de liquide, de telle sorte que la vapeur ne se condense pas sur la structure interne. Par définition, il doit être compris que la structure interne **5** comporte également tous les appareillages ou les éléments insérés à l'intérieur du four autres que ceux constituant l'enveloppe **4** et délimitant l'enceinte **7.** Ainsi, il doit être compris que la structure interne **5** inclut, notamment, la canalisation **18** d'amenée du liquide, le circuit d'aspiration **22,** ainsi que le dispositif de convoyage **26.**

La vapeur régnant dans l'enceinte **7** transmet son énergie thermique par condensation à la pièce **2** à traiter. La vapeur qui change d'état, restitue la chaleur latente de vaporisation à la pièce **2** qui présente une température inférieure à la température d'ébullition du liquide. Dans l'exemple d'application considéré au brasage des composants, il doit être considéré que la vapeur saturée et inerte présente une température légèrement supérieure au point de fusion du matériau d'apport préalablement déposé en relation des pattes de fixation des composants. Il s'ensuit à assemblage des composants sur le support de la pièce.

Après l'opération d'assemblage, le dispositif d'extraction **21** est commandé en fonctionnement pour assurer l'aspiration de la vapeur restant à l'intérieur de l'enceinte hermétique **7.** Le dispositif d'extraction **21** assure par la canalisation **24,** le retour dans l'enceinte hermétique **7,** d'un air dépourvu de vapeur. Lorsque l'enceinte hermétique **7** ne contient plus de vapeur, la porte **9** est ouverte pour assurer la sortie de la pièce **2** à l'extérieur du four, en vue d'être prise en charge par un convoyeur **27.** Le four **1** peut alors être de nouveau utilisé pour assurer le traitement d'une autre pièce **2.**

Le four **1** selon l'invention permet de traiter des pièces sous une atmosphère inerte par l'intermédiaire d'une vapeur dont la température est supérieure au point d'ébullition du liquide de transfert thermique. En effet, il apparait que la vapeur est surchauffée par rapport au point d'ébullition du liquide dans la mesure où elle règne dans une enceinte **7** fermée, dont la structure interne **5** de l'enveloppe est portée à une température également supérieure au point d'ébullition du liquide.

Il doit être noté qu'il est introduit une quantité finie relativement limitée de liquide à l'intérieur de l'enceinte pour obtenir une quantité de vapeur correspondante. A titre d'exemple, il peut être considéré qu'il convient d'introduire 15 grammes de liquide par titre d'enceinte. Le four **1** selon l'invention présente ainsi l'avantage de fonctionner avec une quantité limitée de liquide qui est recyclé chaque cycle de traitement. Il doit être compris que le liquide se trouve transformé en vapeur de façon non permanente, mais séquentiellement, durant le temps de traitement uniquement. A cet égard, l'unité de commande du four pilote pour le traitement de chaque pièce, d'abord, le système **17** pour produire une vapeur à l'intérieur de l'enceinte et, ensuite, le dispositif d'extraction **21** de la vapeur.

Dans la description du fonctionnement du four, il est à considérer que le niveau de la vapeur à l'intérieur de l'enceinte doit être suffisant, afin que la pièce baigne complètement dans la vapeur. Le niveau de la vapeur à l'intérieur de l'enceinte peut être réglé par la quantité de liquide injecté sur la sole **11**. Par ailleurs, il est possible d'injecter un liquide choisi parmi plusieurs liquides de transfert thermique présentant chacun des points d'ébullition de valeurs différentes, afin de régler la température du système. A cet égard, la canalisation **18** peut être reliée par l'intermédiaire de vannes, à divers bacs remplis chacun d'un liquide de transfert différent. Un autre avantage de l'invention a trait à la possibilité d'intégrer le four de condensation dans une ligne de fabrication permettant un traitement en flot continu des pièces. Dans le même sens, il est à noter que la pièce à traiter reste au couru du traitement, dans un même plan qui est contigu aux plans de convoyage en aval et en amont du four.

Le four selon l'invention est adapté pour assurer le traitement simultané d'une ou de plusieurs pièces **2**. De plus, le four peut être équipé avantageusement d'un hublot permettant d'apprécier l'état d'avancement du traitement.

A cet égard, il est à noter qu'un tel hublot réalisé sous la forme d'une plaque de verre monté sur le plafond **13** du four assurant la sécurité chimique de l'ensemble, peut être avantageusement utilisé pour le passage de radiations infrarouges. En effet, il peut être prévu d'équiper le four selon l'invention, d'une source de radiations infrarouges courtes ou moyennes permettant.de modifier les caractéristiques thermiques à l'intérieur du four. Un tel four équipé d'un mode supplémentaire de fonctionnement du type à radiations, permet de rendre plus aisée l'utilisation du four selon l'invention, étant entendu que chaque mode de chauffage (convectif, radiant ou à condensation) peut être utilisé seul ou associé, selon une caractéristique de l'invention.

L'invention n'est pas limitée aux exemples décrits et représentés, car diverses modifications peuvent y être apportées sans sortir du cadre tel que défini dans les revendications ci-jointes.

## Revendications

1. Procédé de traitement thermique d'une pièce **(2)** à l'aide d'au moins un liquide de transfert thermique présentant un point d'ébullition à une valeur donnée, le procédé consistant pour chaque cycle de traitement pour une pièce **(2)** :
- à placer la pièce **(2)** à traiter à l'intérieur d'un four **(1)** dont la structure interne **(5)** détermine une enceinte **(7)** accessible par au moins une porte **(8, 9),**
- à fermer après introduction de la pièce à l'intérieur du four **(1),** la ou les portes **(8, 9),** de manière à obtenir une enceinte hermétique **(7),**
- à placer la structure interne **(5)** du four à une température adaptée pour permettre la condensation sur la pièce à traiter d'une partie de la vapeur,
- à faire régner dans l'enceinte **(7)** du four, une vapeur obtenue à partir d'une vaporisation du liquide de transfert thermique, pour assurer, en partie, sa condensation sur la pièce à traiter et le traitement de la pièce,
- à extraire, après traitement de la pièce et avant la sortie de la pièce du four, la vapeur restante à l'intérieur de l'enceinte **(7)** du four.
- et à sortir la pièce du four,

2. Procédé selon la revendication 1, **caractérisé en ce qu'**il consiste à placer la structure interne (5) du four à une température supérieure au point d'ébullition du liquide.

3. Procédé selon la revendication 2, **caractérisé en ce qu'**il consiste à placer la totalité de la structure interne (5) du four à une température supérieure au point d'ébullition du liquide.

4. Procédé selon la revendication 1, **caractérisé en ce qu'**il consiste, pour faire régner la vapeur dans l'enceinte **(7)** du four, à injecter à l'intérieur du four, une quantité donnée de liquide sur la sole du four, afin d'obtenir son évaporation.

5. Procédé selon la revendication 1, **caractérisé en ce qu'**il consiste, pour faire régner la vapeur dans l'enceinte **(7)** du four, à injecter à l'intérieur du four, une quantité donnée de vapeur jusqu'à obtenir une saturation à l'intérieur de l'enceinte **(7).**

6. Procédé selon la revendication 1, **caractérisé en ce qu'**il consiste, pour extraire la vapeur de l'enceinte **(7)** du four, à l'acheminer à l'extérieur de l'enceinte, afin d'assurer sa condensation.

7. Procédé selon la revendication 1 ou 5, **caractérisé en ce qu'**il consiste pour extraire la vapeur de l'enceinte **(7)** du four, à assurer la condensation de la vapeur à l'intérieur de l'enceinte et à extraire le liquide de l'enceinte.

8. Four à condensation pour le traitement thermique d'une pièce, comportant :
- une enveloppe **(4)** dont la structure interne **(5)** délimite une enceinte **(7)** accessible par au moins une porte **(8,9),**
- un système **(17)** pour faire régner à l'intérieur de l'enceinte, une vapeur obtenue à partir de l'évaporation d'un liquide de transfert thermique et destinée à être condensée en partie sur la pièce à traiter,
- un dispositif (**21**) d'extraction de la vapeur régnant à l'intérieur de l'enceinte du four,
- une structure interne **(5)** délimitant lorsque la ou les portes **(8, 9)** sont fermées, une enceinte hermétique **(7)**
- et des moyens de chauffage **(16)** de la structure interne **(5)** à une température adaptée pour permettre la condensation sur la pièce à traiter, d'une partie d'une vapeur obtenue à partir d'une vaporisation d'un liquide de transfert thermique,
**caractérisé en ce qu'**il comporte
- une unité de commande permettant
◆ après fermeture de la ou des portes **(8, 9)**, de placer la structure interne **(5)** du four, grâce aux moyens de chauffage **(16)** à une température adaptée pour permettre la condensation sur la pièce à traiter, d'une partie de la vapeur obtenue à partir de l'évaporation du liquide de transfert thermique,
◆ de commander le dispositif d'extraction **(21)** pour assurer l'aspiration de la vapeur restant à l'intérieur de l'enceinte hermétique **(7)** avant l'ouverture de la ou des portes **(8, 9)** pour sortir la pièce du four.

9. Four à condensation selon la revendication 8, **caractérisé en ce que** le système (**17**) pour faire régner la vapeur à l'intérieur de l'enceinte est formé par un circuit **(18)** d'amenée du liquide débouchant sur la sole **(11)** du four, afin d'assurer son évaporation.

10. Four à condensation selon les revendications 8 et 9, **caractérisé en ce que** le dispositif d'extraction **(21)** de la vapeur est constitué par un circuit d'aspiration **(22)** de la vapeur, équipé d'une unité de condensation **(23)** dont la sortie **(24)** est reliée à l'enceinte **(7).**

11. Four à condensation selon les revendications 9 et 10, **caractérisé en ce que** l'unité de condensation **(23)** est pourvue d'un bac **(19)** de récupération du liquide de transfert thermique, relié au circuit **(18)** d'amenée du liquide à l'intérieur de l'enceinte.

12. Four à condensation selon la revendication 8 ou 10, **caractérisé en ce que** le dispositif d'extraction **(21)** de la vapeur est constitué par un condenseur placé à l'intérieur de l'enceinte du four et un moyen d'extraction du liquide de transfert thermique situé dans l'enceinte.

13. Four à condensation selon la revendication 8 ou 9, **caractérisé en ce que** le système **(17)** pour faire régner la vapeur à l'intérieur de l'enceinte, est pourvu d'une série de bacs remplis de liquides de transfert thermique présentant des points d'ébullition de valeurs différentes.

14. Four selon la revendication 8, **caractérisé en ce que** l'enveloppe **(4)** est équipée d'un hublot pour le passage de radiations infrarouges courtes ou moyennes produites par une source infrarouge correspondante.

## Patentansprüche

1. Verfahren zur thermischen Bearbeitung eines Werkstücks (2) mit Hilfe wenigstens einer Wärmeübertragungsflüssigkeit, die einen Siedepunkt bei einem gegebenen Wert aufweist, wobei das Verfahren für jeden Bearbeitungszyklus für ein Werkstück (2) darin besteht,
- das zu bearbeitende Werkstück (2) in einem Ofen (1) zu platzieren, dessen innere Struktur (5) einen Raum (7) bildet, der über wenigstens eine Türe (8, 9) zugänglich ist,
- nach Einlegen des Werkstücks in den Ofen (1) die Türe oder die Türen (8, 9) so zu schließen, dass ein hermetisch abgeschlossener Raum (7) entsteht,
- die innere Struktur (5) des Ofens auf eine Temperatur zu bringen, die dazu geeignet ist, die Kondensation eines Teils des Dampfs auf dem zu bearbeitenden Werkstück zu ermöglichen,
- im Raum (7) des Ofens für einen durch Verdampfen der Wärmeübertragungsflüssigkeit erzielten Dampf zu sorgen, um teilweise dessen Kondensation auf dem zu bearbeitenden Werkstück und die Bearbeitung des Werkstücks zu gewährleisten,
- den innen im Raum (7) des Ofens verbliebenen Dampf nach Bearbeitung des Werkstücks und vor Entnahme des Werkstücks aus dem Ofen zu entziehen,
- und das Werkstück aus dem Ofen zu entnehmen.

2. Verfahren nach Anspruch 1,
**dadurch gekennzeichnet, dass** es darin besteht, die innere Struktur (5) des Ofens auf eine Temperatur zu bringen, die über dem Siedepunkt der Flüssigkeit liegt.

3. Verfahren nach Anspruch 2,
**dadurch gekennzeichnet, dass** es darin besteht, die gesamte innere Struktur (5) des Ofens auf eine Temperatur zu bringen, die über dem Siedepunkt der Flüssigkeit liegt.

4. Verfahren nach Anspruch 1,
**dadurch gekennzeichnet, dass** es darin besteht, um in dem Raum (7) des Ofens für Dampf zu sorgen, eine gegebene Menge Flüssigkeit innen in den Ofen auf den Ofenboden zu spritzen, damit die Flüssigkeit verdampft.

5. Verfahren nach Anspruch 1,
**dadurch gekennzeichnet, dass** es darin besteht, eine gegebene Menge Dampf, um in dem Raum (7) des Ofens für Dampf zu sorgen, in das Innere des Ofen einzuführen, bis innen in dem Raum (7) eine Sättigung erreicht ist.

6. Verfahren nach Anspruch 1,
**dadurch gekennzeichnet, dass** es darin besteht, um dem Raum (7) des Ofens Dampf zu entziehen, den Dampf aus dem Ofen nach außen zu leiten, damit dieser kondensiert.

7. Verfahren nach Anspruch 1 oder 5,
**dadurch gekennzeichnet, dass** es darin besteht, um dem Raum (7) des Ofens Dampf zu entziehen, das Kondensieren des Dampfs innen in dem Raum zu gewährleisten und dem Raum die Flüssigkeit zu entziehen.

8. Kondensationsofen zur thermischen Bearbeitung eines Werkstücks, mit
- einem Gehäuse (4), dessen innere Struktur (5) einen Raum (7) begrenzt, der über wenigstens eine Türe (8, 9) zugänglich ist,
- einem System (17), das innen in dem Raum für einen durch Verdampfen einer Wärmeübertragungsflüssigkeit erzielten Dampf sorgt, der dazu bestimmt ist, teilweise auf dem zu bearbeitenden Werkstück zu kondensieren,
- einer Vorrichtung (21) zum Entziehen des innen in dem Raum des Ofens vorhandenen Dampfs,
- einer inneren Struktur (5), die bei geschlossener Türe oder geschlossenen Türen (8, 9) einen hermetisch abgeschlossenen Raum (7) begrenzt,
- und Mitteln zum Aufheizen (16) der inneren Struktur (5) auf eine Temperatur, die dazu geeignet ist, die Kondensation eines Teils eines durch Verdampfen einer Wärmeübertragungsflüssigkeit erzielten Dampfs auf dem zu bearbeitenden Werkstück zu ermöglichen,
**dadurch gekennzeichnet, dass** er eine Steuereinheit umfasst, die es erlaubt:
◆ nach Schließen der Türe oder Türen (8, 9) die innere Struktur (5) des Ofens mittels der Heizmittel (16) auf eine Temperatur zu bringen, die dazu geeignet ist, die Kondensation eines Teils des durch Verdampfen der Wärmeübertragungsflüssigkeit erzielten Dampfs auf dem zu bearbeitenden Werkstück zu ermöglichen,
◆ die Vorrichtung (21) zum Entziehen zu steuern, um das Absaugen des innen in dem hermetisch abgeschlossenen Raum (7) verbliebenen Dampfs vor dem Öffnen der Türe bzw. Türen (8, 9) zur Entnahme des Werkstücks aus dem Ofen zu gewährleisten.

9. Kondensationsofen nach Anspruch 8,
**dadurch gekennzeichnet, dass** das innen im Raum für Dampf sorgende System (17) von einem Kreislauf (18) zur Zuleitung der Flüssigkeit gebildet ist, der auf dem Boden (11) des Ofens einmündet, um das Verdampfen der Flüssigkeit zu gewährleisten.

10. Kondensationsofen nach den Ansprüchen 8 und 9,
**dadurch gekennzeichnet, dass** die Vorrichtung zum Entziehen (21) des Dampfs von einem Kreislauf zum Absaugen (22) des Dampfs gebildet ist, der mit einer Kondensationseinheit (23) versehen ist, deren Austrittsöffnung mit dem Raum (7) verbunden ist.

11. Kondensationsofen nach den Ansprüchen 9 und 10,
**dadurch gekennzeichnet, dass** die Kondensationseinheit (23) mit einem Behälter (19) zur Rückgewinnung der Wärmeübertragungsflüssigkeit versehen ist, der mit dem Kreislauf (18) zur Zuleitung der Flüssigkeit in das Innere des Raums verbunden ist.

12. Kondensationsofen nach Anspruch 8 oder 10,
**dadurch gekennzeichnet, dass** die Vorrichtung zum Entziehen (21) des Dampfs von einem innen in dem Raum des Ofens angeordneten Kondensator und einem in dem Raum angeordneten Mittel zum Entziehen der Wärmeübertragungsflüssigkeit gebildet ist.

13. Kondensationsofen nach Anspruch 8 oder 9,
**dadurch gekennzeichnet, dass** das innen im Raum für Dampf sorgende System (17) mit einem Satz Behälter versehen ist, die mit Wärmeübertragungsflüssigkeiten gefüllt sind, die unterschiedliche Siedepunkte aufweisen.

14. Kondensationsofen nach Anspruch 8,
**dadurch gekennzeichnet, dass** das Gehäuse (4) mit einem Fenster zum Durchtritt von kurz- oder mittelwelligen Infrarotstrahlen versehen ist, die von einer entsprechenden Infrarotquelle erzeugt werden.

## Claims

1. A method of applying heat treatment to a workpiece (2) by means of at least one heat transfer liquid having a boiling point at a given value, the method consisting for each treatment cycle of a workpiece (2):
- in placing the workpiece (2) to be treated inside an oven (1) whose internal structure (5) defines an enclosure (7) that is accessible via at least one door (8, 9);
- in closing after inserting the workpiece inside the oven (1), the door(s) (8,9) so as to obtain a hermetic enclosure (7);
- in placing the internal structure (5) of the oven at a temperature that is suitable for enabling a fraction of the vapour to condense on the workpiece to be treated;
- in causing the enclosure (7) of the oven to be occupied by a vapour obtained by vaporising a heat transfer liquid so as to ensure that a fraction of it condenses on the workpiece to be treated and the treatment of the workpiece;
- in extracting, after treating the workpiece and prior to extracting the workpiece from the oven, the vapour that remains in the oven enclosure (7); and
- in extracting the workpiece from the oven.

2. A method according to claim 1, **characterised in that** it consists in placing the internal structure (5) of the oven at a temperature that is higher than the boiling point of the liquid.

3. A method according to claim 2, **characterised in that** it consists in placing all of the internal structure (5) of the oven at a temperature higher than the boiling point of the liquid.

4. A method according to claim 1, **characterised in that**, to cause the enclosure (7) of the oven to be occupied by the vapour, the method consists in injecting a given quantity of liquid into the oven onto-the sole plate thereof so as to cause the liquid to evaporate.

5. A method according to claim 1, **characterised in that**, in order to cause the enclosure (7) of the oven to be occupied by the vapour, the method consists in injecting a given quantity of vapour into the oven until it reaches saturation inside the enclosure (7).

6. A method according to claim 1, **characterised in that**, in order to extract the vapour from the enclosure (7) of the oven, the method consists in taking the vapour to the outside of the oven for the purpose of causing it to condense.

7. A method according to claim 1 or 5, **characterised in that**, in order to extract the vapour from the enclosure (7) of the oven, the method consists in causing the vapour to condense inside the enclosure and in extracting the liquid from the enclosure.

8. A condensation oven for applying heat treatment to a workpiece, the oven comprising:
- a case (4) whose internal structure (5) defines an enclosure (7) that is accessible via at least one door (8, 9);
- a system (17) for causing vapour obtained by evaporating a heat transfer liquid to occupy the inside of the enclosure, a fraction of which vapour is to condense on the workpiece to be treated;
- an extractor device (21) for extracting the vapour occupying the inside of the enclosure of the oven;
- the intemal structure (5) defining when the door(s) (8, 9) is(are) closed, a hermetic enclosure (7); and
- heater means (16) for heating the internal structure (5) to a temperature suitable for enabling a fraction of vapour obtained by vaporising a heat transfer liquid to condense on the workpiece to be treated;
- the oven being **characterised in that** it includes a control unit adapted:
when the door(s) (8, 9) is(are) closed to place with the heater means (16) the internal structure (5) of the oven at a temperature appropriate for enabling a fraction of the vapour obtained by evaporating the heat transfer liquid to condense on the workpiece to be treated,
to operate the extract device (21) to suck out the vapour remaining inside the hermetic enclosure (7) before the opening of the door(s) (8, 9) in order to extract the workpiece from the oven.

9. A condensation oven according to claim 8, **characterised in that** the system (17) for causing vapour to occupy the inside of the enclosure is formed by a liquid feed circuit (18) opening out onto the sole (11) plate of the oven in order to evaporate the liquid.

10. A condensation oven according to claim 8 or 9, **characterised in that** the vapour extractor device (21) is constituted by a vapour suction circuit (22) fitted with a condenser unit (23) whose outlet (23) is connected to the enclosure (7).

11. A condensation oven according to claim 9 or 10, **characterised in that** the condensation unit (23) is provided with a tank (19) for recovering the heat transfer liquid, which tank is connected to the feed circuit (18) for feeding the liquid to the inside of the enclosure.

12. A condensation oven according to claim 8 or 10, **characterised in that** the vapour extractor device (21) is constituted by a condenser placed inside the enclosure of the oven and by means for extracting the heat transfer liquid from inside the enclosure.

13. A condensation oven according to claim 8 or 9, **characterised in that** the system (17) for causing the inside of the enclosure to be occupied by vapour is provided with a series of tanks filled with heat transfer liquids having boiling points of different values.

14. An oven according to claim 8, **characterised in that** the case (4) is fitted with a porthole for passing short or medium infrared radiation produced by a corresponding infrared source.
